# EUROPEAN PATENT APPLICATION

(11) **EP 3 226 602 A1**
(43) Date of publication of application: **04.10.2017**
(21) Application number: 16163434.0
(22) Date of filing: 31.03.2016
(51) Int. Cl.: H04W 24/02

(54) **TELECOMMUNICATIONS NETWORK**

(71) Applicant: BRITISH TELECOMMUNICATIONS public limited company, London EC1A 7AJ (GB)
(72) Inventor: The designation of the inventor has not yet been filed
(74) Representative: Lau, Chi-Fai

(57) **Abstract**

The invention is applicable to small cell arrangements such as femtocells, and recognises LTE femtocells will often be co-located with WiFi access points. The invention uses the existing WiFi network, or other multi-channel radio network, as a reference for an initial LTE subband allocation. The invention proposes identifying the local WiFi channel allocation (such as through channel energy measurements) on start-up of the LTE femtocell, which should be readily available with co-located cells. That WiFi channel allocation is then used to determine how each of the LTE subbands are to be used based on a predetermined mapping between the WiFi channels and the LTE subbands, in particular the power used for transmissions in each subband.

## Description

### Field of the Invention

This invention relates to a telecommunications network, and in particular to a method of managing a femtocell in a telecommunications network.

### Background to the Invention

A typical cellular telecommunications network comprises a plurality of base stations each supporting a coverage area (a "cell"). Each base station communicates with one or more User Equipment (UE), sometimes referred to as Mobile Terminals (MT), User Terminals (UT) or simply mobiles, using a radio transmission medium and a particular protocol, such as the 4th Generation (4G) Long Term Evolution (LTE) protocol. Each protocol specifies a communication spectrum (i.e. a range of frequencies of electromagnetic radiation) which is shared by all base stations for their respective communications with UEs in their cell.

Increasing internet traffic volumes have led to the trend of network densification, with more cells deployed per unit area to deliver larger user throughputs and reliability. However dense and often unplanned networks, where base stations have been installed by without conducting radio-frequency planning such as by home users, suffer from increased interference from adjacent cells. Interference mitigation techniques, such as Soft Fractional Frequency Reuse (SFR) reduce the impact of interference from neighbouring cells through partitioning available spectrum for use at the cell centre and cell edge.

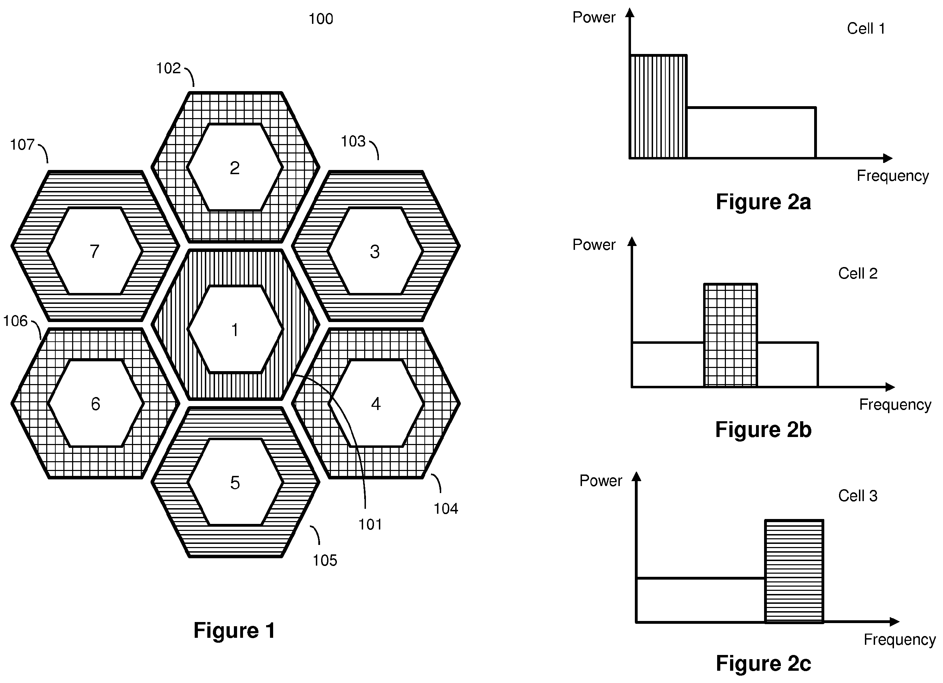

The principle of SFR operation is the following. An LTE frequency band is divided into subbands, and different subbands allocated to UEs in the cell centre (CC) utilising lower transmission power and cell edge (CE) utilising higher transmission power. Figure 1 shows an LTE network consisting of 7 cells: cell 1 101, cell 2 102, cell 3 103, cell 4 104, cell 5 105, cell 6 106 and cell 7 107. Each of these cells have different allocations of the frequency subbands to CC and CE. The frequency subbands here are subband_1, subband_2 and subband_3, represented by vertical striped shading, cross-hatch shading, and horizontal line shading respectively. The allocation is shown in Figure 2a for cell 1, Figure 2b for cells 2, 4 and 6, and Figure 2c for cells 3, 5 and 7. Cell 1 101 has the lower subband, subband_1, allocated to CE, and the remaining subbands allocated to CC. Cell 2 102, cell 4 104 and cell 6 106 have the middle subband, subband_2, allocated to CE, and the remaining subbands allocated to CC. Cell 3 103, cell 5 105 and cell 7 107 have the upper subband, subband_3, allocated to CE, and the remaining subbands allocated to CC. The key point to note in this arrangement of subbands in SFR in this way is that users in CE regions receive less interference since neighbouring cells use non-overlapping subbands at cell edges. In the example with cell 1 101, none of its immediate neighbours are using subband_1 at their cell edge. Cell 2 102 is utilising the frequencies in subband_1 in the cell centre (which is further away from the edge of cell 1) and at lower power, and thus creating less interference.

However, successful operation of techniques like SFR depends on a collection of statistics about the UEs attached to the cell, interference observed at the cell, etc. Typically such information can be collected during run-time or delivered from a centralised location. However, the latter can be outdated or not reflect the changing environment around the cell. The former requires some time after the cell has completed boot-up, during which time the cell would have to operate without optimum channel allocation. Either way, there can be significant unwanted delays before any interference mitigation techniques can be properly applied.

### Summary of the Invention

It is the aim of examples of the present invention to provide an improved method of operating a cell in a telecommunications network.

According to one aspect of the present invention, there is provided a method of managing a femtocell in a wireless telecommunications system comprising a first wireless network and a second wireless network, wherein said first and second wireless networks operate according to different wireless network protocols, said method comprising:
identifying a usage characteristic associated with each of a plurality of frequency channels of the first wireless network measured at the location of said femtocell;
mapping each of the frequency channels of the first wireless network onto an associated one of a plurality of frequency channels of the second wireless network; and
allocating channel usage at the femtocell to each of the plurality of frequency channels in the second wireless network in dependence on the identified usage characteristic and the mapping of each respective frequency channel.

One aim is to make an informed choice about channel allocation as quickly as possible using more easily available WiFi channel information.

The usage characteristic may be the received power in the associated frequency channel, or some other channel occupancy measure in the associated frequency channel. The mapping may be predetermined.

Allocating channel usage may comprise assigning a power for transmissions in each of the frequency channels of the second network, where the power is dependent on the identified usage characteristics and mapping of each respective frequency channel of the first wireless network.

The first network protocol may be the IEEE 802.11 protocol. The second network protocol may be the 4G LTE protocol, and the frequency channels in the second wireless network may be LTE subbands. The femtocell may be an LTE femtocell.

According to a further aspect of the invention, there is provided a femtocell comprising a processor configured in use to:
identify a usage characteristic associated with each of a plurality of frequency channels of a first wireless network measured at the location of said femtocell;
map each of the frequency channels of the first wireless network onto an associated one of a plurality of frequency channels of a second wireless network, wherein the first and second wireless networks operate according to different wireless network protocols;
allocate channel usage by the femtocell to each of the plurality of frequency channels in the second wireless network in dependence on the identified usage characteristic and the mapping of each respective frequency channel.

### Brief Description of the Drawings

For a better understanding of the present invention reference will now be made by way of example only to the accompanying drawings, in which:
Figure 1 shows a LTE network with frequency bands in cells allocated according to a typical soft frequency reuse approach;
Figure 2a is a chart showing frequency allocation for cell 1;
Figure 2b is a chart showing frequency allocation for cells 2, 4 and 6;
Figure 2c is a chart showing frequency allocation for cells 3, 5 and 7;
Figure 3 is a schematic network diagram in an example of the present invention;
Figure 4 is a schematic diagram of a femtocell in an example of the present invention;
Figure 5 is a flow chart summarising the steps of an example of the invention;
Figure 6 is a table showing the mapping between WiFi channels and LTE subbands measured by a femtocell in an example of the present invention;
Figure 7 is a table showing the mapping between WiFi channels and LTE subbands measured by another femtocell in an example of the present invention.

### Description of Preferred Embodiments

The present invention is described herein with reference to particular examples. The invention is not, however, limited to such examples.

Examples of the invention are applicable to small cell arrangements such as femtocells, and recognises LTE femtocells will often be co-located with WiFi access points. The invention uses the existing WiFi network, or other multi-channel radio network, as a reference for an initial LTE subband allocation. The invention proposes identifying the local WiFi channel allocation (such as through channel energy measurements) on start-up of the LTE femtocell, which should be readily available with co-located cells. That WiFi channel allocation is then used to determine how each of the LTE subbands are to be used based on a predetermined mapping between the WiFi channels and the LTE subbands, in particular the power used for transmissions in each subband. The invention works best when the majority of femtocells in the network use the same predetermined mapping to allocate the initial LTE subbands at start-up. The invention is described in relation to SFR, but can be used with other interference mitigation methods.

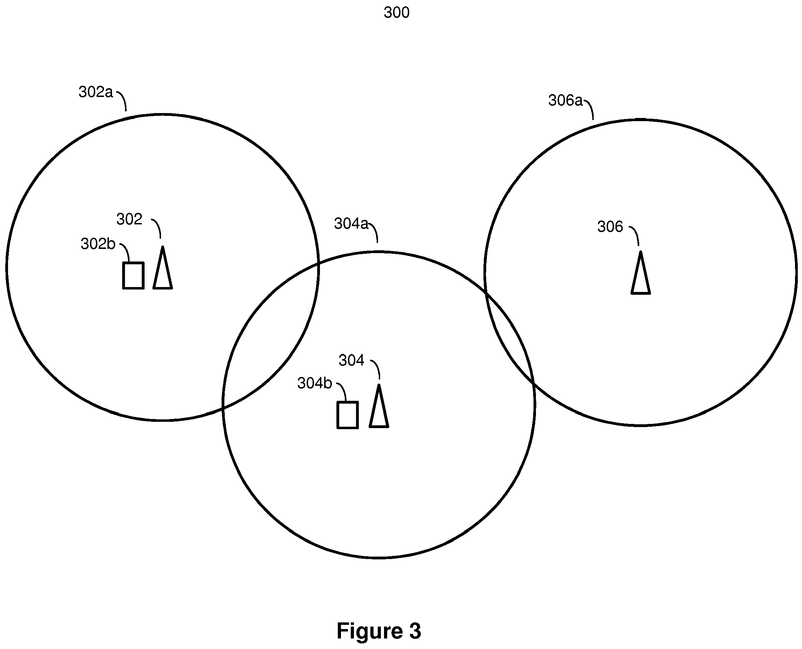

Figure 3 is a schematic diagram of a simplified cellular telecommunications network 300 in an example of the present invention. The telecommunications network comprises both a WiFi network operating according to one of the IEEE 802.11 protocols, and a network operating according to the 4G LTE protocol. The network 300 comprises WiFi access points (APs) 302, 304 and 306, with each AP having a respective coverage area 302a, 302b and 302c, which together form a WiFi network. LTE base stations, in this example femtocells, 302b and 304b, are also present. AP 302 and femtocell 302b are co-located, and similarly AP 304 and femtocell 304b are co-located.

Co-location means that the femtocell is integrated into the same unit as the AP, or be a plug-in unit like a dongle into the AP, or be close by (say within the same house or office) as the AP. If the femtocell is in the same unit or plugged in like a dongle, then the WiFi channel information discussed below can be communicated to the femtocell using a suitable local datalink.

Further APs and LTE base stations have been omitted for simplicity.

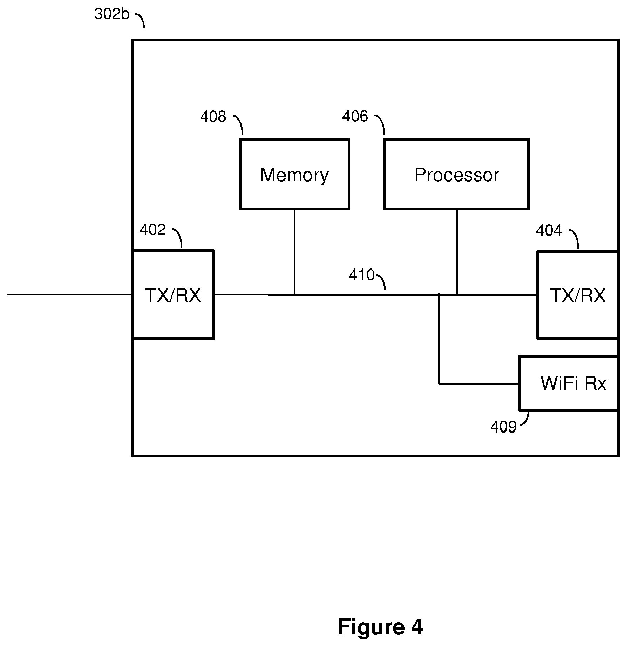

Figure 4 is a schematic diagram of one of the femtocells 302b. Note, femtocell 304b will have the same elements. Femtocell 302b comprises a first transceiver 402, a second transceiver 404, a processor 406, and memory 408, all interconnected via a bus 410. The first transceiver 402 provide a backhaul connection to a core network. The backhaul connection may be provided by a Digital Subscriber Line (DSL) for example. The second transceiver 404 is a wireless antenna configured for cellular communications, which in this example is in accordance with the 4G LTE protocol. The processor 406 process data received by either of the transceivers for routing onto their destinations. The memory can be used to temporarily store or buffer the data, as well as hold application program data for any application programs that are executed by the processor 406. The femtocell 302b also includes a WiFi receiver 409, which can scan WiFi frequencies.

In this example, femtocells 302b is being switched on for the first time or at least after previous configuration timers have expired (e.g. after a prolonged period of inactivity). As such, the femtocell lacks the local data statistics necessary to launch interference mitigation such as soft fractional frequency reuse (SFR). Hence the femtocell may not operate efficiently immediately after being switched on.

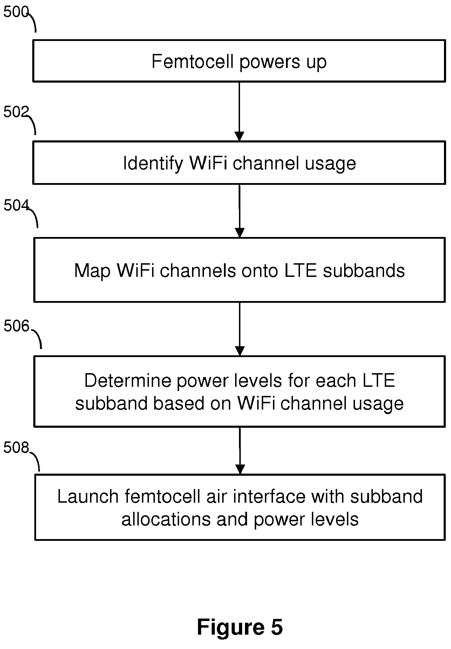

The method summarised in the flow chart of Figure 5 presents a solution to this problem.

In step 500, the femtocell 302b starts up.

In step 502, the femtocell 302b determines the WiFi channel usage in the immediate area. If the femtocell 302b has a connection to the co-located AP 302, this data can be obtained directly from the AP 302.

Alternatively, the femtocell 302b can scan the radio environment of the WiFi network using the WiFi receiver 409. The WiFi receiver 409 can listen in on other 3G and 4G networks, including WiFi. This takes less time than collecting the data required for SFR operation, which typically requires some UEs connecting and sending reports from different cell areas.

In this example, the WiFi network is operating at the 2.4GHz frequency band, which is subdivided into 14 (partially overlapping) frequency channels, and thus all 14 channels are scanned. Other parameters can be used instead of the power levels or detected energy in each of the frequency channels, such as a channel occupancy metric.

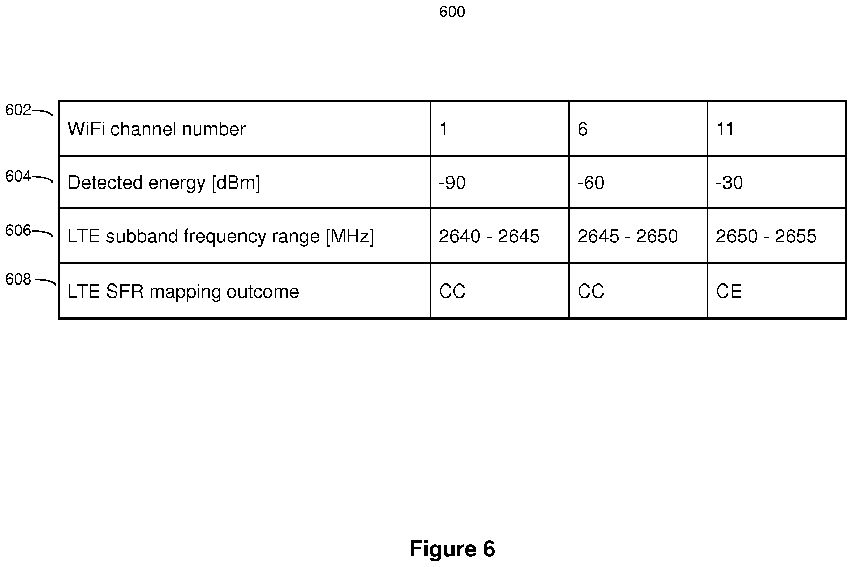

Figure 6 shows a table with simplified example with 3 WiFi channels in row 602, and the detected energy in each respective channel, measured in dBm, in row 604. For example, WiFi channel 1 has a detected energy level of -90dBm (the lowest energy/power), channel 6 an energy level of -60dBm, and channel 11 has a detected energy level of -30dBm (the highest energy level). A person skilled in the art will appreciate that the 3 WiFi channels (1, 6 and 11) shown are the most frequently used channels as they are spread over the frequency band and are non-overlapping, and that the other channels have been omitted for simplicity.

In this example, AP 302 is operating on WiFi channel 11, and hence the highest energy level is detected in this channel at the femtocell 302b. AP 304 is operating on WiFi channel 6, and hence next highest energy level detected, as it is next closest to the femtocell 302b. AP 306 is operating on WiFi channel 1, and hence has the lowest energy level detected, as it is furthest away from the femtocell 302b.

In step 504, the WiFi channels are mapped onto the LTE subbands. This is illustrated in Figure 6, with each WiFi channel number (1, 6 or 11) mapped onto an associated LTE subband frequency range in row 606. In this example, WiFi channel 1 has been mapped onto the lower LTE subband covering 2640-2645MHz, WiFi channel 6 mapped onto the central LTE subband covering 2645-2650MHz, and WiFi channel 11 mapped onto the upper LTE subband covering 2650-2655MHz. This mapping between the WiFi channels and the LTE subbands is predetermined, and used by all femtocells in the LTE network.

As indicated earlier, this example shows only 3 WiFi channels, but even if all 14 bands were presented, a similar mapping could be made, with multiple WiFi channels mapped onto a single LTE subband e.g. WiFi channels 1-5 mapped onto the lower LTE subband, WiFi channels 6-10 onto the central LTE subband, and WiFi channels 11-14 onto the upper LTE subband. Furthermore, the number of LTE subbands that are mapped onto are not limited to 3, but any number can be used.

In step 506, the power levels for transmissions in each of the LTE subbands are determined based on the energy levels detected in the respective WiFi channel that the LTE channel maps onto. In this example, WiFi channel 11 exhibits the highest energy levels, and the corresponding LTE subband 2650-2655MHz is allocated the highest power for cell edge (CE) users. WiFi channel 1 and 6 have lower detected energy levels, and thus are allocated lower power for cell centre (CC) users. Thus, the LTE subband that maps to the WiFi channel or channels with the highest energy compared to the other WiFi channels is allocated the highest power, or for CE users. Conversely, LTE subband that maps to the WiFi channel or channels with the lowest energy compared to the other WiFi channels is allocated the lowest power, or for CC users.

The logic behind this particular allocation is that since WiFi channel 11 has the highest energy, it is highly likely that this channel has minimal interference at the radiating WiFi AP (302), and that since it is detected the strongest, this is the nearby, or co-located wifi AP. In this case, by selecting 3rd subband as the CE subband the LTE cell has a good chance of reducing the interference for cell-edge users.

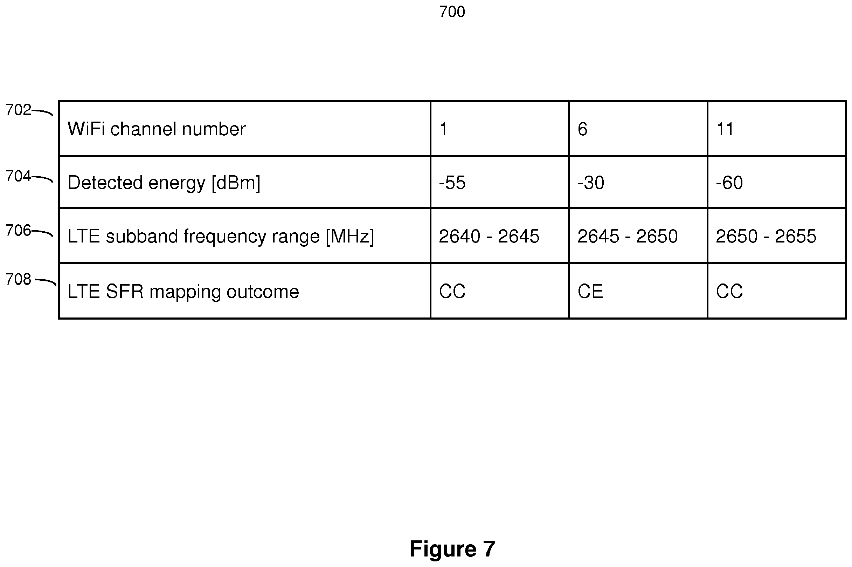

This is illustrated more clearly when we look at femtocell 304b, which is co-located with AP 304 operating on WiFi channel 6. Figure 7 shows the resulting WiFi channel characteristics and mappings if femtocell 304b also adopts the method above. Here, WiFi channels 1 and 11 are detected as having the lowest energy levels, and WiFi channel 6 the highest energy level, which is consistent with femtocell 304b being collocated with AP 304 operating on WiFi channel 6. As such, the highest power level is assigned to the LTE subband (2640-2645MHz) corresponding to WiFi channel 6, with lower power used in the other subbands. Femtocells 302b and 304b are thus less likely to interfere, as the subband power allocations are complementary.

Finally, in step 508, the air interface for the femtocell 302b is launched using the subbands and associated power allocations for transmissions determined from the previous steps.

Exemplary embodiments of the invention are realised, at least in part, by executable computer program code which may be embodied in an application program data stored in memory 408. When such computer program code is loaded into the memory of the processor 406 for execution, it provides a computer program code structure which is capable of performing at least part of the methods in accordance with the above described exemplary embodiments of the invention.

A person skilled in the art will appreciate that the computer program structure referred can correspond to the flow chart shown in Figure 5, where each step of the flow chart can correspond to at least one line of computer program code and that such, in combination with the processor 406, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of managing a femtocell in a wireless telecommunications system comprising a first wireless network and a second wireless network, wherein said first and second wireless networks operate according to different wireless network protocols, said method comprising:
identifying a usage characteristic associated with each of a plurality of frequency channels of the first wireless network measured at the location of said femtocell;
mapping each of the frequency channels of the first wireless network onto an associated one of a plurality of frequency channels of the second wireless network; and
allocating channel usage at the femtocell to each of the plurality of frequency channels in the second wireless network in dependence on the identified usage characteristic and the mapping of each respective frequency channel.

2. A method according to claim 1, wherein the usage characteristic is the received power in the associated frequency channel.

3. A method according to claim 1, wherein the usage characteristic is the channel occupancy in the associated frequency channel.

4. A method according to any preceding claim, wherein the mapping is predetermined.

5. A method according to any preceding claim, wherein allocating channel usage comprises assigning a power for transmissions in each of the frequency channels of the second network, where the power is dependent on the identified usage characteristics and mapping of each respective frequency channel of the first wireless network.

6. A method according to any preceding claim, wherein the first network protocol is the IEEE 802.11 protocol.

7. A method according to any preceding claim, wherein the second network protocol is the 4G LTE protocol, and the frequency channels in the second wireless network are LTE subbands.

8. A method according to claim 7, wherein the femtocell is an LTE femtocell.

9. A computer program element comprising computer program code to, when loaded into a computer system and executed thereon, cause the computer to perform the steps of a method as claimed in any of claims 1 to 8.

10. A femtocell comprising a processor configured in use to:
identify a usage characteristic associated with each of a plurality of frequency channels of a first wireless network measured at the location of said femtocell;
map each of the frequency channels of the first wireless network onto an associated one of a plurality of frequency channels of a second wireless network, wherein the first and second wireless networks operate according to different wireless network protocols;
allocate channel usage at the femtocell to each of the plurality of frequency channels in the second wireless network in dependence on the identified usage characteristic and the mapping of each respective frequency channel.
